# EUROPEAN PATENT APPLICATION

(11) **EP 4 607 670 A1**
(43) Date of publication of application: **27.08.2025**
(21) Application number: 24862991.7
(22) Date of filing: 08.07.2024
(51) Int. Cl.: H01M 50/24, H01M 10/04, H01M 50/502, H01M 50/211

(54) **BATTERY MODULE AND BATTERY PACK INCLUDING SAME**

(30) Priority: 06.09.2023 KR 20230118578
(71) Applicant: LG Energy Solution, Ltd., Seoul 07335 (KR)
(72) Inventor: KIM, Ji Hwan, Daejeon 34122 (KR); SIN, Jehwan, Daejeon 34122 (KR); PARK, Sanggab, Daejeon 34122 (KR); KWON, Wooyong, Daejeon 34122 (KR)
(74) Representative: BCKIP Part mbB
(86) International application number: PCT/KR2024/009646
(87) International publication number: WO 2025/053408

(57) **Abstract**

A battery module according to an embodiment of the present disclosure includes a battery cell stack in which a plurality of battery cells are stacked; a module frame that houses the battery cell stack and is opened on one surface and the other surface facing each other; an end plate that covers each of the one surface and the other surface of the module frame; and a film member located between the battery cell stack and the module frame. The module frame includes a first joint surface formed on sides constituting the one surface and the other surface respectively, and the end plate includes a second joint surface joined to the first joint surface. A rib is formed in the end plate, with the rib protruding while being located inner than the portion where the first joint surface and the second joint surface are joined. The film member includes a protrusion part that protrudes in a direction perpendicular to one surface of the film member.

## Description

### [TECHNICAL FIELD]

### Cross Citation with Related Application(s)

This application claims the benefit of Korean Patent Application No. 10-2023-0118578 filed on September 6, 2023 in the Korean Intellectual Property Office, the disclosure of which is incorporated herein by reference in its entirety.

The present disclosure relates to a battery module and a battery pack including the same, and more particularly, to a battery module having improved safety and productivity, and a battery pack including the same.

### [BACKGROUND]

In modern society, as portable devices such as a mobile phone, a notebook computer, a camcorder and a digital camera have been daily used, technologies of a field related to the mobile devices has been actively developed. In addition, as a secondary battery capable of being charged and discharged is used as a power source for an electric vehicle(EV), a hybrid electric vehicle(HEV), a plug-in hybrid electric vehicle(P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are arranged, but in the case of a secondary battery used for a medium- or large-sized device such as automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a battery management system(BMS), a battery disconnect unit(BDU), and a cooling system to form a battery pack.

Since the medium- or large-sized battery module is preferably manufactured with as small a size and weight as possible, a prismatic battery, a pouch-type battery, or the like, which can be stacked with a high degree of integration and has a small weight relative to capacity, is mainly used as a battery cell of the medium- or large-sized battery module.

On the other hand, the battery module may include a module frame and an end plate that house a battery cell stack composed of a plurality of battery cells in an internal space to protect the plurality of battery cells from external impact, heat, or vibration.

Generally, in order to join the module frame and the end plate, welding is performed on the joint surface while the module frame and the end plate are placed facing each other. At this time, internal components including battery cells may be damaged due to weld spatters during the welding process. Therefore, there is a need to for a technology that can solve these problems of the prior art.

### [DETAILED DESCRIPTION OF THE INVENTION]

### [Technical Problem]

It is an object of the present disclosure to provide a battery module capable of protecting internal components during welding of a module frame and an end plate, and a battery pack including the same.

However, the technical object of the present disclosure is not limited to the aforementioned one, and may be extended in various ways within the scope of the technical idea included in the present disclosure.

### [Technical Solution]

A battery module according to an embodiment of the present disclosure comprises a battery cell stack in which a plurality of battery cells are stacked; a module frame that houses the battery cell stack and is opened on one surface and the other surface facing each other; an end plate that covers each of the one surface and the other surface of the module frame; and a film member located between the battery cell stack and the module frame. The module frame includes a first joint surface formed on sides constituting the one surface and the other surface respectively, and the end plate includes a second joint surface joined to the first joint surface. A rib is formed in the end plate, with the rib protruding while being located inner than the portion where the first joint surface and the second joint surface are joined. The film member includes a protrusion part that protrudes in a direction perpendicular to one surface of the film member.

The protrusion part may be formed so as to face the gap between the rib and the module frame.

The battery module may further comprise at least one busbar frame that covers one surface or both surfaces of the battery cell stack.

The protrusion part may protrude toward the busbar frame.

The protrusion part abuts against the busbar frame.

A busbar connected to an electrode lead extending from the battery cell may be mounted on the busbar frame.

The rib may cover a portion where the first joint surface and the second joint surface are joined in the internal space of the module frame.

The rib may extend along the direction in which the first joint surface and the second joint surface extend.

The film member may be located between the battery cell stack and the side surface part of the module frame.

The protrusion part may have a shape that extends along the height direction.

A battery pack according to another embodiment of the present disclosure comprises the battery module.

### [Advantageous Effects]

According to embodiments of the present disclosure, a rib is formed on the end plate and the protrusion part of the film member is formed in the path in the direction in which the rib of the end plate protrudes, thereby capable of preventing weld spatter generated during welding of the module frame and the end plate from damaging internal components.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 is a perspective view showing a battery module according to one embodiment of the present disclosure;
FIG. 2 is an exploded perspective view of the battery module of FIG. 1;
FIG. 3 is a plan view showing one of the battery cells included in the battery module of FIG. 2;
FIG. 4 is a perspective view showing a module frame according to one embodiment of the present disclosure;
FIG. 5 is an exploded perspective view of the module frame of FIG. 4;
FIG. 6(a) is an enlarged perspective view of the portion "B" of FIG. 5, and FIG. 6 (b) is a cross-sectional view showing a cross section cut along the cutting line C-C' of FIG. 6 (a);
FIG. 7 is a perspective view showing an end plate and an insulating cover according to one embodiment of the present disclosure;
FIG. 8 is a perspective view showing a state where the end plate and the insulating cover of FIG. 7 are coupled;
FIG. 9 is a perspective view of the end plate and the insulating cover of FIG. 8 as viewed from a different angle;
FIG. 10 is a partial diagram which enlarges and shows the portion "D" of FIG. 9;
FIG. 11 is a plan view of the portion "D" of FIG. 9 as viewed from above; and
FIG. 12 is a cross-sectional view showing a cross section cut along the cutting line A-A' of FIG. 1.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

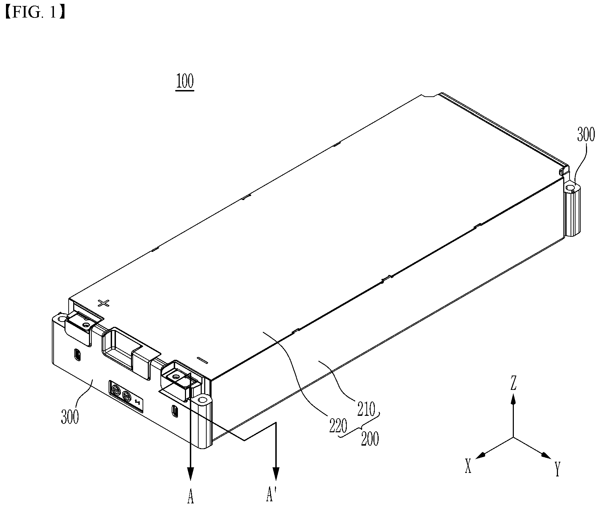

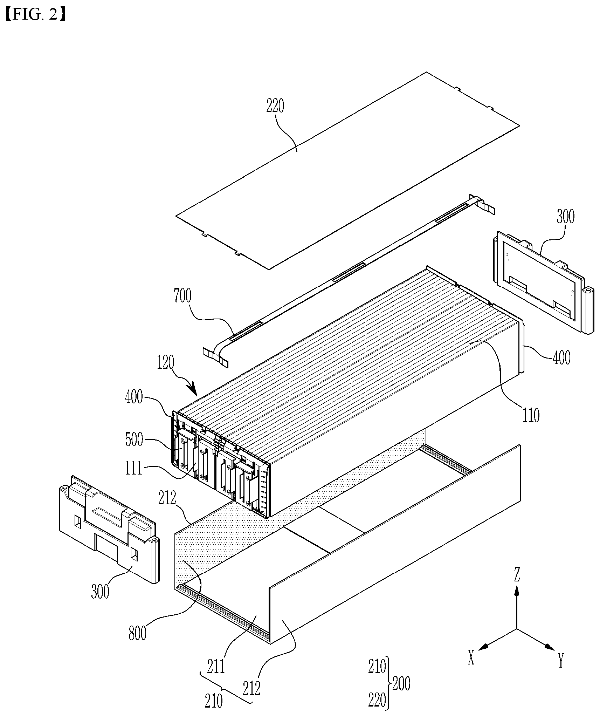

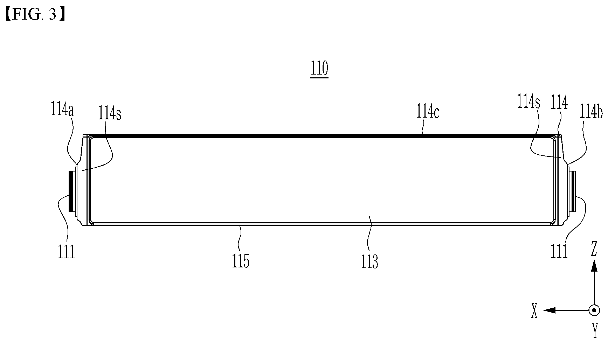

FIG. 1 is a perspective view showing a battery module according to one embodiment of the present disclosure. FIG. 2 is an exploded perspective view of the battery module of FIG. 1. FIG. 3 is a plan view showing one of the battery cells included in the battery module of FIG. 2.

Referring to FIGS. 1 to 3, a battery module 100 according to one embodiment of the present disclosure includes: a battery cell stack 120 in which a plurality of battery cells 110 are stacked; a module frame 200 that houses the battery cell stack 120 and is opened on one surface and the other surface facing each other; and end plates 300 that cover the one surface and the other surface of the module frame 200 respectively.

That is, the battery cell stack 120 can be housed in an internal space formed by the module frame 200 and the end plate 300. In addition, considering that the module frame 200 has a hexahedral structure, one surface and the other surface of the module frame 200 facing the electrode leads 111 of the battery cells 110 may be opened.

If the battery cells 110 according to the present embodiment are gathered in plurality, the types thereof are not particularly limited. That is, the battery cells 110 according to the present embodiment may be a pouch-type battery cell, a prismatic battery cell, or a cylindrical battery cell. As one example, the battery cell 110 according to the present embodiment is described below as pouch-type battery cells.

A battery cell 110 according to one embodiment of the present disclosure may be a pouch-type battery in which an electrode assembly having electrode leads 111 protruding in one direction or in both directions is housed in a pouch case 114. The battery cell 110 may be formed in a rectangular sheet-like structure. The battery cell 110 may be formed by housing an electrode assembly in a pouch case 114 made of a laminate sheet including a resin layer and a metal layer, and then adhering the outer peripheral part of the pouch case 114. As an example, the battery cell 110 may have a structure in which two electrode leads 111 face each other and protrude from one end part 114a and the other end part 114b of pouch case 114. As another example, a structure in which all the electrode leads 111 of the battery cells 110 protrude in one direction is also possible. One of the electrode leads 111 is a positive electrode lead, and the other one is a negative electrode lead.

The battery cell 110 can be produced by joining both end parts 114a and 114b of a pouch case 114 and one side part 114c connecting them in a state in which an electrode assembly (not shown) is housed in a pouch case 114. In other words, the battery cell 110 according to one embodiment of the present disclosure has a total of three sealing parts 114s at both end parts 114a and 114b and one side part 114c, wherein the sealing parts 114s have a structure that is sealed by a method such as fusion, and the remaining other one side part may be composed of a folding part 115. That is, the battery cell 110 according to the present embodiment may have a structure in which the electrode assembly is housed inside the pouch case 114, wherein the pouch case 114 has a sealing part 114s formed by sealing the outer peripheral part of the portion where the electrode assembly is housed. In FIG. 3, only a state in which the sealing parts 114s are formed at both end parts 114a and 114b of the pouch case 114 are illustrated, and the sealing part is not illustrated on the upper side facing the folding part 115, i.e., at one side part 114c, however, the sealing part of one side part 114c may be in a state being folded to one side after sealing is completed for space utilization.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can have electrical insulation properties in order to protect the electrode assembly from the outside. Such an outer resin layer may include a polyethylene terephthalate(PET) resin or a nylon resin. The metal layer can prevent air, moisture, and the like from flowing into the pouch-type secondary battery. This metal layer may include aluminum(Al). The inner resin layers may be heat-sealed to each other by heat and/or pressure applied in a state in which the electrode assembly is embedded. This inner resin layer may include casted polypropylene(CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to provide a sealing part 114s. The pouch case is sealed in this manner, so that the battery cell 110, which is a pouch-type secondary battery, can be produced.

The battery cells 110 may be configured in plural numbers, and the plurality of battery cells 110 may be stacked along one direction so as to be electrically connected to each other, thereby forming a battery cell stack 120. In particular, as shown in FIG. 2, a plurality of battery cells 110 may be stacked in an upright state along a direction parallel to the y-axis so as to make one side surfaces of the cell main body 113 (see FIG. 3) face each other. Thereby, the electrode leads 111 may protrude in a direction perpendicular to the direction in which the battery cells 110 are stacked. That is, in the battery cell 110, one electrode lead 111 may protrude toward the x-axis direction, and the other electrode lead 111 may protrude toward the -x-axis direction.

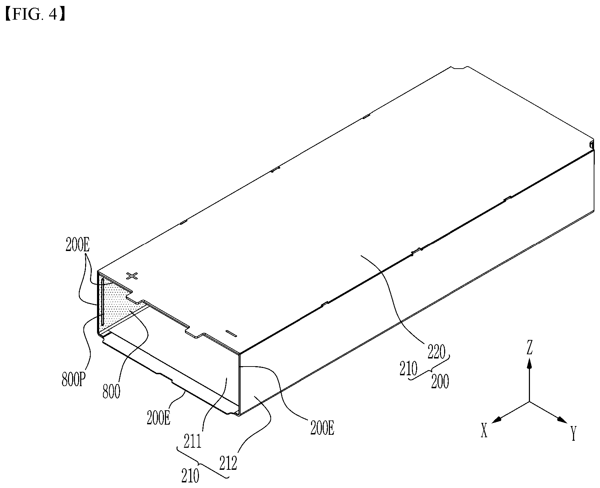

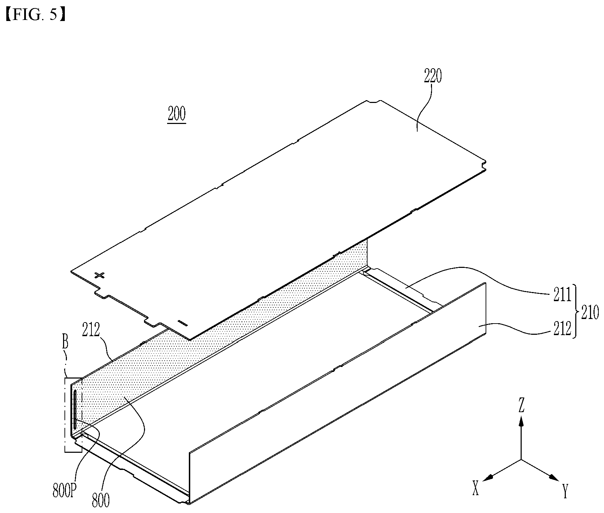

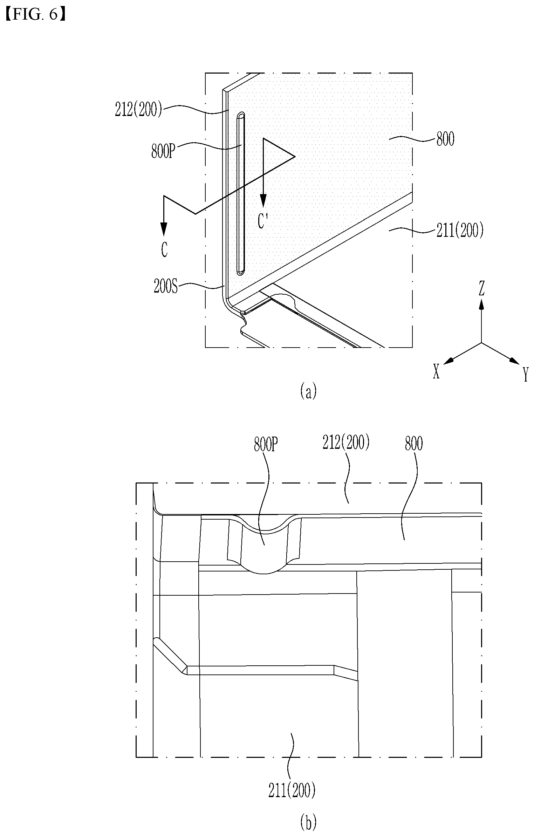

FIG. 4 is a perspective view showing a module frame according to one embodiment of the present disclosure. FIG. 5 is an exploded perspective view of the module frame of FIG. 4. FIG. 6(a) is an enlarged perspective view of the portion "B" of FIG. 5, and FIG. 6 (b) is a cross-sectional view showing a cross section cut along the cutting line C-C' of FIG. 6 (a).

Referring to FIGS. 2, 4 to 6 together, the module frame 200 may be a structure in which one surface and the other surface opposite to the one surface are opened. More specifically, the module frame 200 may be opened in both directions in which the electrode leads 111 protrude with respect to the battery cell stack 120.

The module frame 200 according to an embodiment of the present disclosure may include a U-shaped frame 210 that covers the lower surface and both side surfaces of the battery cell stack 120 and an upper cover 220 that covers the open upper surface of the U-shaped frame 210. The U-shaped frame 210 may include a bottom part 211 and two side surface parts 212 extending upward from opposite both sides of the bottom part 211. The U-shaped frame 210 and the upper cover 220 may be joined to each other between corresponding edges. More specifically, the two side surface parts 212 of the U-shaped frame 210 may be joined to two opposed sides of the upper cover 220.

Further, in another embodiment of the present disclosure, the module frame may be in the form of a mono frame integrated with the upper surface, the lower surface, and both side surfaces.

The module frame 200 according to the present embodiment includes a first joint surface 200S formed on the sides 200E constituting the one open surface and the other open surface respectively. The first joint surface 200S of the module frame 200 corresponds to a portion joined to the second joint surface 300S of the end plate 300 described below. The first joint surface 200S may be formed on the four sides 200E of the one open surface of the module frame 200. Although not shown in the figure, the first joint surface 200S may also be formed on all four sides of the other open surface of the module frame 200.

Meanwhile, the battery module 100 according to the present embodiment includes a film member 800 located between the battery cell stack 120 and the module frame 200. Specifically, the film member 800 may be located between the battery cell stack 120 and the side surface part 212 of the module frame 200. More specifically, the film member 800 may be attached to the inner surface of the side surface part 212 of the module frame 200. The film member 800 may include an electrically insulating material. As an example, the film member 800 may include at least one of polycarbonate(PC) or polyethylene terephthalate(PET), but any material having electrical insulation may be applied to the film member 800 without limitation. The film member 800 is arranged for the purpose of reinforcing electrical insulation between the battery cell stack 120 and the module frame 200. A compression pad may be arranged on one surface of the outermost battery cell 110 in the battery cell stack 120, but if the compression pad is defective, there is a risk of a short circuit or the like occurring between the outermost battery cell 110 and the module frame 200. Accordingly, the film member 800 may be arranged to block electrical connection between the battery cell stack 120 and the module frame 200. Meanwhile, the protrusion part 800P formed on the film member 800 will be described below.

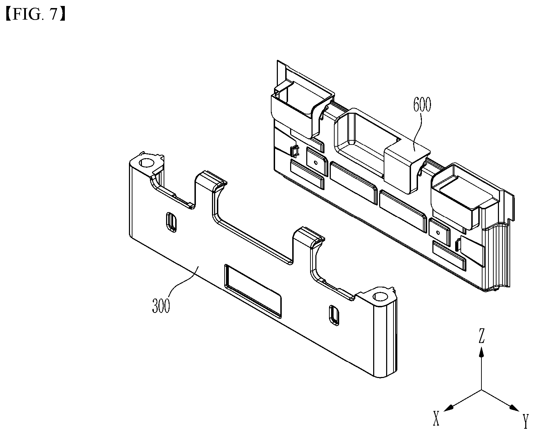

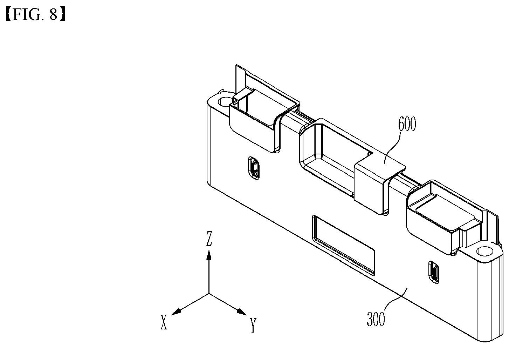

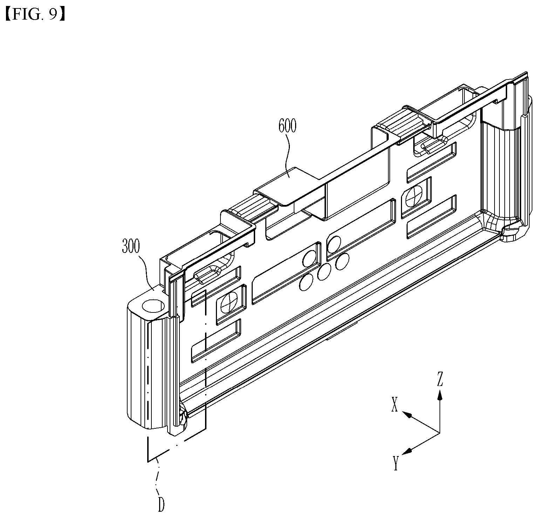

FIG. 7 is a perspective view showing an end plate and an insulating cover according to one embodiment of the present disclosure. FIG. 8 is a perspective view showing a state where the end plate and the insulating cover of FIG. 7 are coupled. FIG. 9 is a perspective view of the end plate and the insulating cover of FIG. 8 as viewed from a different angle.

Referring to FIGS. 2, 7 to 9, the end plates 300 according to one embodiment of the present disclosure cover the one open surface and the other open surface of the module frame 200, respectively. The module frame 200 and the end plate 300 may include a metal material having a predetermined strength and may protect the battery cell stack 120 housed in the internal space thereof from external impact or vibration. In addition, in order to prevent the end plate 300 from coming into contact with the electrode lead or the busbar to cause a risk of short circuit or the like, an insulating cover 600 may be interposed between the battery cell stack 120 and the end plate 300. Such an insulating cover 600 include an electrically insulating material.

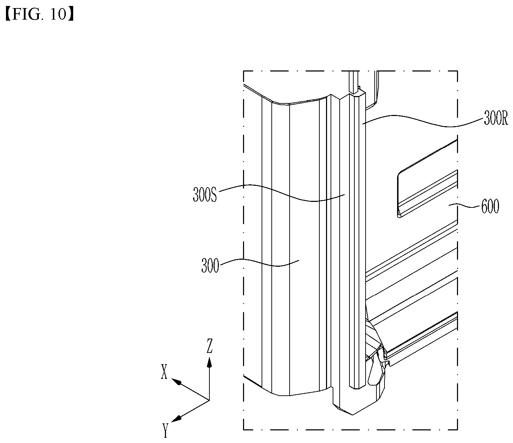

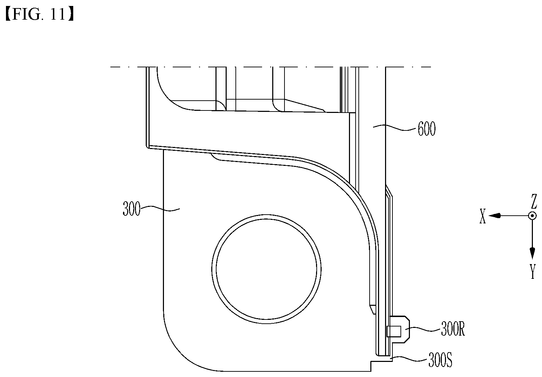

FIG. 10 is a partial diagram which enlarges and shows the portion "D" of FIG. 9. FIG. 11 is a plan view of the portion "D" of FIG. 9 as viewed from above.

Referring to FIG. 2 and FIGS. 9 to 11, the end plate 300 includes a second joint surface 300S that is joined to the first joint surface 200S (see FIG. 6) of the module frame 200.

When the end plates 300 cover the one open surface and the other open surface of the module frame 200, the second joint surface 300S of the end plate 300 is a portion that faces each other and corresponds to the first joint surface 200S of the module frame.

The first joint surface 200S of the module frame 200 and the second joint surface 300S of the end plate 300 are joined while being abutted on each other. More specifically, welding is performed in a state in which the first joint surface 200S of the module frame 200 and the second joint surface 300S of the end plate 300 abut on each other, so that the end plate 300 can be joined to the module frame 200.

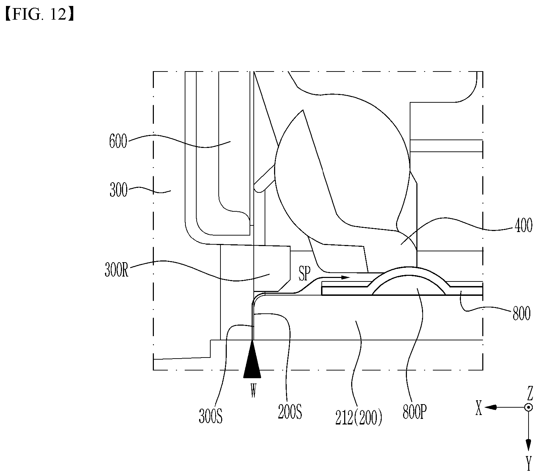

FIG. 12 is a cross-sectional view showing a cross section cut along the cutting line A-A' of FIG. 1.

Referring to FIGS. 2, 5, 6, 9 to 12, in this embodiment, a rib 300R is formed in the end plate 300, wherein the rib protrudes while being located inner than the portion where the first joint surface 200S and the second joint surface 300S are joined. Also, the film member 800 includes a protrusion part 800P that protrudes in a direction perpendicular to one surface of the film member 800. That is, the protrusion part 800P can protrude in an inner direction where the battery cell stack 120 is located with respect to the film member 800.

On the other hand, "the rib 300R is located inner than the portion where the first joint surface 200S and the second joint surface 300S are joined" means that based on the internal space of the module frame 200 in which the battery cell stack 120 is housed, the rib 300R is located closer to the battery cell stack 120 than the portion where the first joint surface 200S and the second joint surface 300S are joined.

In this embodiment, the rib 300R may protrude from the end plate 300 in the direction in which the battery cell stack 120 is located. For example, the rib 300R formed on the end plate 300 located in the x-axis direction in the battery cell stack 120 may protrude toward the - x-axis direction, and the rib 300R formed on the end plate 300 located in the -x-axis direction in the battery cell stack 120 may protrude toward the x-axis direction.

During the process of welding(W) the first joint surface 200S of the module frame 200 and the second joint surface 300S of the end plate to each other, a weld spatter(SP) phenomenon may occur in which welding sparks scatter in all directions, and such weld spatter(SP) may damage the battery cells 110 or other electrical components inside the battery module 100. In addition, when a laser beam is applied to the portion where the first joint surface 200S and the second joint surface 300S abut for welding(W), such laser beam may transmit through the module frame 200 and the end plate 300, and damage the battery cells 110 or other internal components. However, the rib 300R according to the present embodiment can block weld spatter(SP) or a transmitted laser beam from affecting the battery cells 110 or other internal components.

In particular, the rib 300R can cover the portion where the first joint surface 200S and the second joint surface 300S are joined in an internal space of the module frame 200. In addition, the rib 300R can be extended along the direction in which the first joint surface 200S and the second joint surface 300S are extended. Here, the direction in which the first joint surface 200S and the second joint surface 300S are extended is the same as the direction in which the sides 200E (see FIG. 4) constituting the one open surface and the other open surface of the module frame 200 respectively are extended.

In addition, the rib 300R according to one embodiment of the present disclosure may be formed to cover the entire region of the portion where the first joint surface 200S and the second joint surface 300S are joined. On the other hand, the rib 300R according to another embodiment of the present disclosure may be formed to cover only a part of the portion where the first joint surface 200S and the second joint surface 300S are joined.

In addition, it is preferable that the welding(W) is performed while the module frame 200 and the end plate 300 are fixed to correspond to fixed positions predetermined each other. In this embodiment, when the end plate 300 is coupled with the module frame 200, the rib 300R is inserted into an inner space of the module frame 200, so that the end plate 300 can be coupled in the correct position without being misaligned. That is, the rib 300R serves to improve the temporary assembly property between the module frame 200 and the end plate 300.

In addition, even while welding(W) is in progress, the end plate 300 can be fixed to a fixed position by the rib 300R. The rib 300R must be located adjacent to the first joint surface 200S and the second joint surface 300S, which is effective in preventing the end plate 300 from being detached and in fixing it.

Furthermore, the rib 300R can prevent occurrence of distortion at the welding portion due to the heat generated, and even if slight distortion occurs, the distorted or protruded area at the welding portion can prevent the battery cell stack and other internal components from being affected.

Meanwhile, the weld spatter(SP) generated during the process of welding(W) the first joint surface 200S of the module frame 200 and the second joint surface 300S of the end plate to each other can be primarily blocked by the rib 300R, but some weld spatter(SP) may flow into the interior of the module frame 200 along the gap between the rib 300R and the side surface part 212 of the module frame 200, as shown in FIG. 12.

Therefore, in the battery module 100 according to the present embodiment, a protrusion part 800P is provided on the film member 800 to prevent the inflowing weld spatter SP from affecting the battery cells 110 or other electrical components inside the module frame 200. The protrusion part 800P may be formed so as to face the gap between the rib 300R and the module frame 200. Specifically, the protrusion part 800P may be formed so as to face the gap between the rib 300R and the side surface part 212 of the module frame 200. The weld spatter(SP) is strong in straightness, wherein since the protrusion part 800P faces the gap between the rib 300R and the side surface part 212 of the module frame 200, it can effectively block the weld spatter(SP) flowing in along the gap.

In addition, the protrusion part 800P can be easily prepared by changing the shape of a partial region of the film member 800. That is, the present embodiment has the advantage in that the process of forming the protrusion part 800P is simple, and it is able to effectively block the weld spatter(SP) without requiring a large cost.

As shown in FIG. 6, the protrusion part 800P according to the present embodiment can have a shape that extends along the height direction. Herein, the height direction means a direction parallel to the z-axis. The protrusion part 800P extending along the height direction can effectively block all spaces into which the weld spatter(SP) may flow.

On the other hand, the rib 300R may have a structure integrated with the end plate 300, and the end plate 300 comprising the rib 300R may be manufactured by molding. Since this does not join a predetermined rib-shaped structure, it does not require a separate joining process.

Referring again to FIGS. 1, 2 and 12, the battery module 100 according to the present embodiment may include at least one busbar frame 400 that covers one surface or both surfaces of the battery cell stack 120.

As an example, two busbar frames 400 may be located on both sides of the battery cell stack 120, and as another example, one busbar frame 400 may be located on one side of the battery cell stack 120. The busbar frame 400 may be located between the battery cell stack 120 and the insulating cover 600, and may include an electrically insulating material.

The busbar frame 400 may be equipped with a busbar 500 connected to an electrode lead 111 extending from a battery cell 110 for electrical connection between the battery cells 110. Specifically, the busbar 500 may be equipped on the opposite side of the side of the busbar frame 400 that faces the battery cell stack 120.

The busbar 500 is for electrically connecting the battery cells 110 inside the battery module 100, and preferably includes a metal material so as to enable electrical connection. Electrode leads 111 extending from the battery cells 110 may be bent after passing through a slit formed in the busbar frame 400 and connected to the busbar 500. As an example, one electrode lead 111 may be bent after passing through a slit of a busbar frame 400 located on one side of the battery cell stack 120 and connected to the busbar 500, and the other electrode lead 111 can pass through a slit of the other busbar frame 400 located on the other side of the battery cell stack 120 and then be connected to the other busbar 500. The connection method between the electrode lead 111 and the busbar is not particularly limited, and as an example, weld-joining may be performed. As the electrode leads 111 of the battery cells 110 are connected to the busbar in this way, the battery cells 110 may be electrically connected to each other via the busbar. In this manner, a HV (High Voltage) connection may be performed within the battery module 100. In addition, a connecting part 700 may be further arranged for electrical connection between the electrical components mounted on each of the busbar frames 400 located on one side and the other side of the battery cell stack 120. This connecting part 700 may be a flexible printed circuit board(FPCB) or a flexible flat cable(FFC).

At this time, the protrusion part 800P according to the present embodiment may be protruded toward the busbar frame 400. The protrusion part 800P protruding toward the busbar frame 400 may hinder the weld spatter(SP) from passing through the space between the busbar frame 400 and the side surface part 212 of the module frame 200. Thereby, damage to the battery cells 110 due to the weld spatter(SP) may be prevented.

More preferably, the protrusion part 800P may abut against the busbar frame 400. Since the protrusion part 800P protrudes toward the busbar frame 400 and abuts against the busbar frame 400, the space between the busbar frame 400 and the side surface part 212 of the module frame 200 is completely blocked, thereby capable of preventing the weld spatter(SP) from reaching the battery cell 110. However, the effect of preventing the inflow of the weld spatter(SP) may be sufficient if the protrusion part 800P protrudes toward the busbar frame 400, and it is not necessarily essential that the protrusion part 800P abuts against the busbar frame 400.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS(battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS(Energy Storage System), and can be applied to various devices capable of using a secondary battery, without being limited thereto.

Although the invention has been described in detail with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

100: battery module
110: battery cell
120: battery cell stack
200: module frame
300: end plate
300R: rib
400: busbar frame
800: film member
800P: protrusion part

## Claims

1. A battery module comprising:
a battery cell stack in which a plurality of battery cells are stacked;
a module frame that houses the battery cell stack and is opened on one surface and the other surface facing each other;
an end plate that covers each of the one surface and the other surface of the module frame; and
a film member located between the battery cell stack and the module frame,
wherein the module frame includes a first joint surface formed on sides constituting the one surface and the other surface respectively,
wherein the end plate includes a second joint surface joined to the first joint surface,
wherein a rib is formed in the end plate, with the rib protruding while being located inner than the portion where the first joint surface and the second joint surface are joined, and
wherein the film member includes a protrusion part that protrudes in a direction perpendicular to one surface of the film member.

2. The battery module according to claim 1, wherein:
the protrusion part is formed so as to face the gap between the rib and the module frame.

3. The battery module according to claim 1,
further comprising at least one busbar frame that covers one surface or both surfaces of the battery cell stack.

4. The battery module according to claim 3, wherein:
the protrusion part protrudes toward the busbar frame.

5. The battery module according to claim 3, wherein:
the protrusion part abuts against the busbar frame.

6. The battery module according to claim 3, wherein:
a busbar connected to an electrode lead extending from the battery cell is mounted on the busbar frame.

7. The battery module according to claim 1, wherein:
the rib covers a portion where the first joint surface and the second joint surface are joined in an internal space of the module frame.

8. The battery module according to claim 1, wherein: the rib extends along the direction in which the first joint surface and the second joint surface extend.

9. The battery module according to claim 1, wherein:
the film member is located between the battery cell stack and the side surface part of the module frame.

10. The battery module according to claim 1, wherein:
the protrusion part has a shape that extends along the height direction.

11. A battery pack comprising the battery module according to claim 1.
